(19) Europäisches Patentamt
European Patent Office
Office européen des brevets

(11) EP 3 719 088 B1

(12) EUROPEAN PATENT SPECIFICATION

(45) Date of publication and mention of the grant of the patent:
**04.09.2024 Bulletin 2024/36**

(21) Application number: **19166858.1**

(22) Date of filing: **02.04.2019**

(51) International Patent Classification (IPC):
***C09J 4/00*** *(2006.01)* ***C08G 59/68*** *(2006.01)*
***C09J 163/00*** *(2006.01)* ***C09J 171/02*** *(2006.01)*
***C09J 179/02*** *(2006.01)*

(52) Cooperative Patent Classification (CPC):
(C-Sets available)
**C09J 163/00; C08G 59/68; C09J 4/00; C09J 179/02** (Cont.)

# (54) CURABLE PRECURSOR OF A STRUCTURAL ADHESIVE COMPOSITION

HÄRTBARER VORLÄUFER EINER STRUKTURELLEN KLEBSTOFFZUSAMMENSETZUNG

PRÉCURSEUR DURCISSABLE D'UNE COMPOSITION ADHÉSIVE STRUCTURALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.10.2020 Bulletin 2020/41**

(73) Proprietor: **3M Innovative Properties Company**
**Saint Paul, MN 55133-3427 (US)**

(72) Inventors:
- **Tasch, Mr. Boris**
  **41453 Neuss (DE)**
- **Jung, Mr. Adrian**
  **41453 Neuss (DE)**

(74) Representative: **Mathys & Squire**
**Theatinerstraße 7**
**80333 München (DE)**

(56) References cited:
**EP-A1- 3 275 913**
**EP-A1- 3 632 964**
**WO-A1-2018/057335**
**WO-A2-03/052016**
**US-A1- 2005 101 684**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09J 179/02, C08K 3/36, C08K 7/20, C08L 51/04, C08L 63/00;**
**C09J 179/02, C08K 7/20, C08L 51/04, C08L 63/00, C08L 77/00**

## Description

### Technical Field

The present disclosure relates generally to the field of adhesives, more specifically to the field of structural adhesive compositions and films for use in particular for bonding metal or composite metal parts. More specifically, the present disclosure according to the appended claims relates to a partially cured precursor composition. The present disclosure also relates to a method of bonding two parts and to a composite article. The present disclosure is further directed to the use of a partially cured precursor of a structural adhesive composition for construction and transportation applications, in particular for body-in-white bonding applications in the automotive industry.

### Background

Adhesives have been used for a variety of holding, sealing, protecting, marking and masking purposes. One type of adhesive which is particularly preferred for many applications is represented by structural adhesives. Structural adhesives are typically thermosetting resin compositions that may be used to replace or augment conventional joining techniques such as screws, bolts, nails, staples, rivets and metal fusion processes (e.g. welding, brazing and soldering). Structural adhesives are used in a variety of applications that include general-use industrial applications, as well as high-performance applications in the automotive and aerospace industries. To be suitable as structural adhesives, the adhesives shall exhibit high and durable mechanical strength as well as high impact resistance.

Structural adhesives may, in particular, be used for metal joints in vehicles. For example, an adhesive may be used to bond a metal panel, for example a roof panel to the support structure or chassis of the vehicle. Further, an adhesive may be used in joining two metal panels of a vehicle closure panel. Vehicle closure panels typically comprise an assembly of an outer and an inner metal panel whereby a hem structure is formed by folding an edge of an outer panel over an edge of the inner panel. Typically, an adhesive is provided there between to bond the panels together. Further, a sealant typically needs to be applied at the joint of the metal panels to provide for sufficient corrosion resistance. For example, US Pat. No. 6,000,118 (Biernat et al.) discloses the use of a flowable sealant bead between the facing surfaces of the two panels, and a thin film of uncured paint-like resin between a flange on the outer panel and the exposed surface of the inner panel. The paint film is cured to a solid impervious condition by a baking operation performed on the completed door panel. US Pat. No. 6,368,008 (Biernat et al.) discloses the use of an adhesive for securing two metal panels together. The edge of the joint is further sealed by a metal coating. WO 2009/071269 (Morral et al.) discloses an expandable epoxy paste adhesive as a sealant for a hem flange. A further hemmed structure is disclosed in US Pat. No. 6,528,176 (Asai et al.). Further efforts have been undertaken to develop adhesive compositions whereby two metal panels, in particular an outer and an inner panel of a vehicle closure panel, could be joined with an adhesive without the need for a further material for sealing the joint. Thus, it became desirable to develop adhesive systems that provide adequate bonding while also sealing the joint and providing corrosion resistance. A partial solution has been described in e.g. WO 2007/014039 (Lamon), which discloses a thermally expandable and curable epoxy-based precursor of an expanded thermoset film toughened foamed film comprising a mixture of solid and liquid epoxy resins, and which is claimed to provide both favorable energy absorbing properties and gap filling properties upon curing. Other partial solutions have been described in EP-A1-2 700 683 (Elgimiabi et al.) and in WO 2017/197087 (Aizawa) which disclose structural adhesive films suitable for forming a hem flange structure. Structural adhesive films or tapes typically suffer from lack of elasticity and insufficient tackiness which makes them only partially suitable for hem flange bonding. Further partial solutions have been described in US-A1-2002/0182955 (Weglewski et al.) which discloses a so-called structural bonding tape. Structural bonding tapes are generally insufficient in terms of adhesive strength and corrosion resistance.

In some specific bonding applications, structural adhesives may be required to adhesively bond assemblies provided with challenging configurations or critical topologies. This is particularly the case in those situations where the parts to be bonded are provided with an uneven or irregular gap. A partial solution has been described in EP-A1-3 243 885 (Koch et al.) which discloses a structural adhesive film provided with different thicknesses along its extension. The described films are typically not fully satisfactory for providing acceptable bonding performance in assemblies provided with more complex three-dimensional configurations or topologies.

WO 03/052016 A2, US 2005/101684 A1, EP 3 275 913 A1, EP 3 632 964 A1 and WO 2018/057335 relate to curable compositions based on cationically polymerizable monomers and initiators, wherein the compositions are used for a range of applications such as adhesives, dental impression or rapid prototyping.

Without contesting the technical advantages associated with the solutions known in the art, there is still a need for a structural adhesive composition which would overcome the above-mentioned deficiencies.

## Summary

According to one aspect, the present disclosure is directed to a partially cured precursor of a structural adhesive composition as defined in the appended claims 1 to 6.

In still another aspect of the present disclosure, it is provided a method of bonding two parts, which comprises the steps of:

a) applying a partially cured precursor as described above to a surface of at least one of the two parts;
b) joining the two parts so that the partially cured precursor (hybrid) structural adhesive composition is positioned between the two parts; and
c) optionally, partially curing the curable precursor according of step a) by initiating the polymerization initiator of the cationically self-polymerizable monomer, thereby forming a partially cured precursor comprising a polymeric material resulting from the self-polymerization reaction product of the cationically self-polymerizable monomer; and/or
d) substantially fully curing the partially cured precursor of step a) or c) by initiating the curing initiator of the cationically curable monomer, thereby obtaining a substantially fully cured (hybrid) structural adhesive composition and bonding the two parts.

According to yet another aspect, the present disclosure relates to the use a partially cured precursor as described above, for industrial applications, in particular for construction and transportation applications, more in particular for body-in-white bonding applications for the automotive industry.

## Detailed description

According to a first aspect, the present disclosure relates to a partially cured precursor of a structural adhesive as defined in appended claims 1 to 6.

It has been surprisingly found that a curable precursor as described below is particularly suitable for manufacturing structural adhesive compositions provided with excellent characteristics and performance as to elasticity, tackiness, cold-flow, flexibility, handling properties and surface wetting in their uncured (or pre-cured) state, as well as to adhesive strength, ageing stability and corrosion resistance in their fully cured state. The curable precursor of a structural adhesive composition as described below have been surprisingly found to combine most of the advantageous characteristics of both the structural adhesive films and the structural bonding tapes known in the art, without exhibiting their known deficiencies.

It has further been discovered that a curable precursor as described below may be appropriately shaped in the form of a three-dimensional object, in particular a complex three-dimensional object, which makes it advantageously suitable to provide excellent bonding performance in assemblies provided with complex three-dimensional configurations or topologies. The curable precursor as described below is suitable for manufacturing structural adhesive compositions provided with excellent characteristics and performance as to adhesion to oily contaminated substrates, such as stainless steel and aluminum.

Without wishing to be bound by theory, it is believed that these excellent characteristics are due in particular to the combined presence of a thixotropic agent and a specific dual curing system in the curable precursor, wherein the curing system comprises: a) a polymerization initiator of a cationically self-polymerizable monomer which is initiated at a temperature T1, and b) a curing initiator of a curable monomer which is initiated at a temperature T2 and which is different from the polymerization initiator of the cationically self-polymerizable monomer. The thixotropic agent is believed to mainly provide the advantageous shapeability characteristics of the curable precursor. The curable precursor may be advantageously applied in a geometrically controlled way directly on a particular substrate.

Still without wishing to be bound by theory, it is believed that this dual/hybrid curing system involving two independent reactive systems, which have a different chemical nature and which co-exist in the curable precursor without interfering with each other, has the ability to form - upon complete curing - an interpenetrating network involving a polymeric material comprising the self-polymerization reaction product of a polymerizable material comprising the cationically self-polymerizable monomer and a polymeric product resulting from the curing of the curable monomer.

More specifically, the above described hybrid curing system is particularly suitable to perform an overall curing mechanism involving a two-stage reaction whereby two polymer networks are formed sequentially.

In a first stage reaction (stage-B), the cationically self-polymerizable monomers polymerize upon initiation by the polymerization initiator of the cationically self-polymerizable monomer at a temperature T1, thereby forming a polymeric material comprising the self-polymerization reaction product of a polymerizable material comprising the cationically self-polymerizable monomers. Typically, the temperature T1 at which the polymerization initiator of the cationically self-polymerizable monomer is initiated is insufficient to cause initiation of the curing initiator of the curable monomer. As a consequence, the first stage reaction typically results in a partially cured precursor, wherein the curable monomers are

substantially uncured and are in particular embedded into the polymeric material comprising the self-polymerization reaction product of the polymerizable material comprising the cationically self-polymerizable monomers.

The first stage reaction which typically leads to a phase change of the initial curable precursor due in particular to the polymeric material comprising the self-polymerization reaction product of the cationically self-polymerizable monomers providing structural integrity to the initial curable precursor, is typically referred to as a film-forming reaction. Advantageously, the first stage reaction does typically not require any substantial energy input.

In the context of the present disclosure, it has been surprisingly found that the first stage reaction (stage-B) and the accompanying phase change does not, or only moderately affect, the three-dimensional shape of the initial curable precursor. As such, the partially cured precursor resulting for the first stage reaction is provided with excellent shape retention characteristics, when compared to the initial shape of the curable precursor. This is a particularly surprising and counterintuitive finding as the skilled person would have logically expected the three-dimensional polymeric network resulting from the self-polymerization reaction of the cationically self-polymerizable monomers (i.e. comprised in the partially cured precursor resulting from the first stage reaction) to substantially affect the three-dimensional shape of the initial curable precursor, due in particular to a modification of the viscosity, thixotropic and wettability characteristics of the initial curable precursor. In the context of the present disclosure, it has been no less surprisingly found that the thixotropic agent does not detrimentally affect the formation of the polymeric material resulting from the self-polymerization reaction of the cationically self-polymerizable monomers. This is a further unexpected finding as the thixotropic agent could have detrimentally affected not only the formation of the polymeric material per se (in particular the kinetic of the self-polymerization reaction of the cationically self-polymerizable monomers), but also the nature of three-dimensional polymeric network of the polymeric material resulting from the self-polymerization reaction of the cationically self-polymerizable monomers.

As such, the curable precursor enables near net shape application of the structural adhesive, whereby the initial shape of the curable precursor is retained and fixed by the formation of the polymeric material resulting from the self-polymerization reaction of the cationically self-polymerizable monomers occurring during the first stage reaction. The near net shape application enabled by the curable precursor considerably reduces, or even eliminates, the need for further reshaping, finishing, readjusting, and remodelling of the initially applied precursor after partial curing.

In a typical aspect, the partially cured precursor takes the form of a film-like self-supporting composition having a dimensional stability, which makes it possible for it to be pre-applied on a selected substrate, in particular a liner, until further processing. The partially cured precursor is typically provided with excellent characteristics and performance as to elasticity, tackiness, cold-flow and surface wetting. Advantageously, the partially cured precursor may be appropriately shaped to fulfil the requirements of any specific applications.

The second stage reaction (stage-A) occurs after the first stage reaction and typically involves curing the curable monomers upon initiation (typically thermal initiation) by the appropriate curing initiators at a temperature T2. This reaction step typically results in forming a polymeric product resulting from the curing of the curable monomer, in particular from the (co)polymerization of the curable monomers and the curing initiators (or curatives) of the curable monomers.

The curable precursor typically relies on the above-described dual/hybrid curing system involving two independent reactive systems activated at distinct temperatures (T1 and T2) to ensure performing the above-described two-stage reaction in a sequential manner. Advantageously, the curable precursor may be partially cured (or pre-cured) and pre-applied on a selected substrate before being finally cured in-place to produce a structural adhesive provided with excellent characteristics directly on the desired substrate or article.

As such, the curable precursor may be suitable for bonding metal parts, in particular for hem flange bonding of metal parts in the automotive industry. Advantageously still, the curable precursor is suitable for automated handling and application, in particular by fast robotic equipment.

In the context of the present disclosure, the expression "cationically self-polymerizable monomer" is meant to refer to a monomer able to form a polymeric product (homopolymer) resulting from the polymerization of the monomer almost exclusively with itself and involving the formation of a cationic intermediate moiety, thereby forming a homopolymer. The term "homopolymer" is herein meant to designate polymer(s) resulting from the polymerization of a single type of monomers.

In the context of the present disclosure still, the expression "curable monomer" is mean to refer to a monomer able to form a polymeric product (heteropolymer) resulting from the (co)polymerization of the curable monomers and the curing initiators (or curatives) of the curable monomers. The term "heteropolymer" is herewith meant to designate a polymer resulting from the (co)polymerization of more than one type of monomers.

In the context of the present disclosure, the expression "the curable monomers are substantially uncured" is meant to designate that less than 10wt.%, less than 5wt.%, less than 2wt.%, or even less than 1 wt. % of the initial curable monomers are cured.

The terms "glass transition temperature" and "Tg" are used interchangeably and refer to the glass transition temperature of a (co)polymeric material or a mixture of monomers and polymers. Unless otherwise indicated, glass transition temperature values are determined by Differential Scanning Calorimetry (DSC).

According to one typical aspect of the curable precursor of the disclosure, the temperature T2 for use herein is greater than temperature T1. In a typical aspect, the temperature T1 at which the polymerization initiator of the cationically self-polymerizable monomer is initiated is insufficient to cause initiation of the curing initiator of the curable monomer which therefore remain substantially unreacted.

According to another typical aspect of the curable precursor, the cationically self-polymerizable monomer and the curable monomer for use herein are unable to chemically react with each other, in particular by covalent bonding, even when subjected to their respective polymerization or curing initiation. In an exemplary aspect, the cationically self-polymerizable monomer and the curable monomer are unable to chemically react with each other, when subjected to polymerization or curing initiation at a temperature of 23°C.

In one exemplary aspect the temperature T1 for use herein is no greater than 90°C, no greater than 80°C, no greater than 60°C, no greater than 50°C, no greater than 40°C, no greater than 30°C, no greater than 25°C, no greater than 20°C, or even no greater than 15°C. In some exemplary aspects the polymerization initiator of the cationically self-polymerizable monomer is already initiated at room temperature (about 23°C).

In another exemplary aspect the temperature T1 is in a range from -10°C to 85°C, from 0°C to 80°C, from 5°C to 60°C, from 5°C to 50°C, from 10 to 40°C, or even from 15 to 35°C.

In still another exemplary aspect the temperature T2 for use herein is greater than 90°C, greater than 100°C, greater than 120°C, greater than 140°C, greater than 150°C, greater than 160°C, greater than 180°C, or even greater than 200°C.

According to another typical aspect the temperature T2 is in a range from 95°C to 250°C, from 100°C to 220°C, from 120°C to 200°C, from 140°C to 200°C, from 140°C to 180°C, or even from 160°C to 180°C.

In some exemplary aspects the curing initiator of the curable monomer for use herein which is initiated at a temperature T2 may be qualified as a thermally-initiated curing initiator or thermal initiator which is activated at substantially high temperatures.

Cationically self-polymerizable monomers for use herein are not particularly limited. Suitable cationically self-polymerizable monomers for use herein may be easily identified by those skilled in the art in the light of the present disclosure.

According to one advantageous aspect of the present invention, the cationically self-polymerizable monomer is an aziridino-functional polyether oligomer.

In a beneficial aspect of the disclosure, the cationically self-polymerizable monomer for use herein is an oligomer having, in particular a number average molecular weight no greater than 20.000 g/mol, no greater than 15.000 g/mol, no greater than 12.000 g/mol, no greater than 10.000 g/mol, or even no greater than 8.000 g/mol. Unless otherwise indicated, the number average molecular weight is determined by GPC using appropriate techniques well known to those skilled in the art.

In an exemplary aspect, the aziridino-functional oligomer for use herein has a number average molecular weight no greater than 20.000 g/mol, no greater than 15.000 g/mol, no greater than 12.000 g/mol, no greater than 10.000 g/mol, or even no greater than 8.000 g/mol.

According to an advantageous aspect, the cationically self-polymerizable monomer is an aziridino-functional (linear) polyether oligomer, in particular an N-alkyl aziridino-functional (linear) polyether oligomer.

Suitable polyether oligomers may be produced in a manner known to those skilled in the art by the reaction of the starting compound having a reactive hydrogen atom with alkylene oxides, for example ethylene oxide, propylene oxide, butylene oxide, styrene oxide, tetrahydrofuran or epichlorohydrine or mixtures of two or more thereof. Especially suitable polyether oligomers for use herein are obtainable by polyaddition of ethylene oxide, 1,2-propylene oxide, 1,2-butylene oxide or tetrahydrofuran or of mixtures of two or more of the mentioned compounds with the aid of a suitable starting compound and a suitable catalyst.

In a particularly beneficial aspect, suitable polyether oligomers for use herein are polyetherdiols obtainable by cationic copolymerization of ethylene oxide and tetrahydrofuran under catalytic action of boron trifluoride etherate. Suitable cationically self-polymerizable monomers for use herein and possible production methods thereof are described e.g. in U.S. Pat. No. 3,453,242 (Schmitt et al.).

The cationically self-polymerizable monomer for use herein may have the following formula:

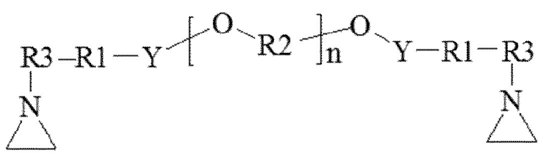

wherein:

$R^1$ is a covalent bond or an alkylene group;
each $R^2$ is independently selected from the group consisting of alkylene groups;
$R^3$ is a straight chain or branched alkylene groups;
Y is a divalent linking group;
and n is an integer selected such that the calculated number average molecular weight of the polyether oligomer is in particular greater than 2000 g/mol.

The cationically self-polymerizable monomer for use herein may have the following formula:

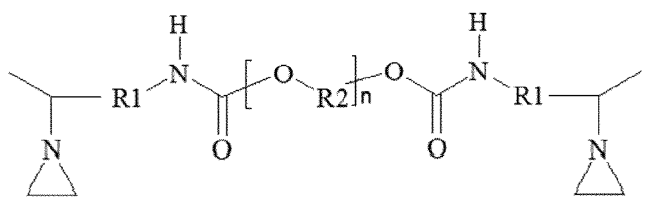

wherein:

$R^1$ is an alkylene group;
each $R^2$ is independently selected from the group consisting of alkylene groups having 2 to 6 carbon atoms; and n is an integer selected such that the calculated number average molecular weight of the polyether oligomer is in particular between 2000 and 10.000 g/ mol.

The cationically self-polymerizable monomer for use herein may have the following formula:

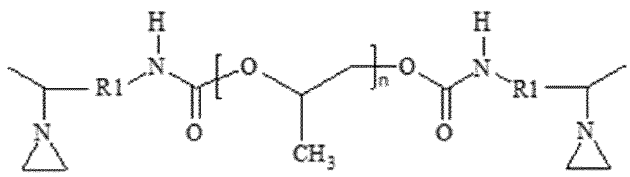 .

In an advantageous aspect, radical $R^1$ is an alkylene group having two carbon atoms. In another advantageous aspect, radical $R^2$ is independently selected from the group consisting of linear alkylene groups having 2 to 6 carbon atoms.
The cationically self-polymerizable monomer for use herein may have the following formula:

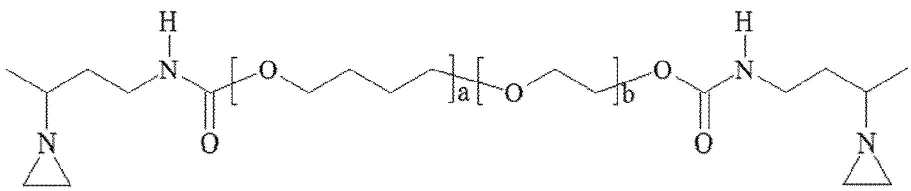

wherein a and b are integers greater than or equal to 1, and the sum of a and b is equal to n.
According to an exemplary aspect n is selected such that the calculated number average molecular weight of the cationically self-polymerizable monomer is no greater than 10.000 grams/mole.
Curable monomers for use herein are not particularly limited, as long as they are different from the cationically self-polymerizable monomers.
According to an advantageous aspect of the present disclosure, the curable monomer for use herein comprises at least one functional group selected from the group consisting of epoxy groups.
The curable monomer may be an epoxy resin. Exemplary epoxy resins for use herein may be advantageously selected from the group consisting of phenolic epoxy resins, bisphenol epoxy resins, hydrogenated epoxy resins, aliphatic epoxy resins, halogenated bisphenol epoxy resins, novolac epoxy resins, and any mixtures thereof.
Epoxy resins are well known to those skilled in the art of structural adhesive compositions. Suitable epoxy resins for use herein and their methods of manufacturing are amply described e.g. in EP-A1-2 700 683 (Elgimiabi et al.) and in WO 2017/197087 (Aizawa).

The curable may be an epoxy resin selected from the group consisting of novolac epoxy resins, bisphenol epoxy resins, in particular those derived from the reaction of bisphenol-A with epichlorhydrin (DGEBA resins), and any mixtures thereof.

Polymerization initiators of the cationically self-polymerizable monomer for use herein are not particularly limited. Any polymerization initiators of cationically self-polymerizable monomers commonly known in the art of structural adhesives may be used in the context of the present disclosure. Suitable polymerization initiators of the cationically self-polymerizable monomer for use herein may be easily identified by those skilled in the art in the light of the present disclosure.

Exemplary polymerization initiators of the cationically self-polymerizable monomer for use herein are amply described in O.C. DERMER, G. E. HAM "Ethylenimine and other Aziridines", Academic Press (1969), and in particular in US-A1-2003/0153726 (Eckhardt et al.).

The polymerization initiator of the cationically self-polymerizable monomer for use herein may be selected from the group consisting of protonating agents, alkylating agents, and any combinations or mixtures thereof.

The polymerization initiator of the cationically self-polymerizable monomer may be selected from the group consisting of alkylating agents, in particular from the group consisting of arylsulphonic acid esters, sulfonium salts, in particular alkyl sulfonium salts, and any combinations or mixtures thereof.

More advantageously, the polymerization initiator of the cationically self-polymerizable monomer for use herein is selected from the group of arylsulphonic acid esters, in particular from the group consisting of p-toluene sulphonic acid esters, and preferably methyl-p-toluene sulfonate.

In an alternatively advantageous aspect of the disclosure, the polymerization initiator of the cationically self-polymerizable monomer is selected from the group consisting of protonating agents, in particular from the group consisting of Lewis acids, Broensted acids or precursor of Broensted acids, and any combinations or mixtures thereof.

In another advantageous aspect, the polymerization initiator of the cationically self-polymerizable monomer may be selected from the group consisting of Broensted acids, in particular from the group consisting of sulfonic acids, sulfonium acids, phosphonic acids, phosphoric acids, carboxylic acids, antimonic acids, boric acids, and any combinations, mixtures or salts thereof.

In still another advantageous aspect, the polymerization initiator of the cationically self-polymerizable monomer may be selected from the group consisting of Broensted acids, in combination with antacid-acting components, in particular selected from the group consisting of oxides, hydroxides, carbonates and carboxylates of the elements aluminium, chromium, copper, germanium, manganese, lead, antimony, tin, tellurium, titanium and zinc. The antacid-acting component may beneficially be selected to comprise zinc, and wherein the polymerization initiator of the cationically self-polymerizable monomer is in particular selected to be zinc tosylate.

Curing initiators of the curable monomer for use herein are not particularly limited, as long as they are different from the polymerization initiators of the cationically self-polymerizable monomers.

According to an advantageous aspect of the present disclosure, the curing initiator of the curable monomer is selected from the group consisting of primary amines, secondary amines, and any combinations or mixtures thereof.

The amines for use as curing initiator of the curable monomer may be selected from the group consisting of aliphatic amines, cycloaliphatic amines, aromatic amines, aromatic structures having one or more amino moiety, polyamines, polyamine adducts, dicyandiamides, and any combinations or mixtures thereof.

According to still another advantageous aspect the curing initiator of the curable monomer for use herein may be selected from the group consisting of dicyandiamide, polyamines, polyamine adducts, and any combinations or mixtures thereof.

In a preferred aspect, the curing initiator of the curable monomer may be selected to be dicyandiamide. Further it may be comprised a curing accelerator of the curable monomer, which is in particular selected from the group consisting of polyamines, polyamine adducts, ureas, substituted urea adducts, imidazoles, imidazole salts, imidazolines, aromatic tertiary amines, and any combinations or mixtures thereof.

Curing initiators and curing accelerators are well known to those skilled in the art of structural adhesive compositions. Suitable curing initiators and curing accelerators for use herein and their methods of manufacturing are amply described e.g. in EP-A1-2 700 683 (Elgimiabi et al.) and in WO 2017/197087 (Aizawa).

In one preferred execution, the curing accelerator of the curable monomer is selected from the group of polyamine adducts, substituted ureas, in particular N-substituted urea adducts.

The curing accelerator of the curable monomer may be selected from the group of substituted urea adducts, in particular N-substituted urea adducts. It has been indeed surprisingly discovered that the use of a curing accelerator of the curable monomer selected from the group of substituted urea adducts, in particular N-substituted urea adducts, substantially improve the adhesion properties, in particular the peel adhesion properties of the resulting structural adhesive composition.

Thixotropic agents for use herein are not particularly limited. Any thixotropic agents commonly known in the art of structural adhesives may be used in the context of the present disclosure. Suitable thixotropic agents for use herein

may be easily identified by those skilled in the art in the light of the present disclosure.

According to one typical aspect of the disclosure, the thixotropic agent for use herein is selected from the group of inorganic and organic thixotropic agents.

According to another typical aspect, the thixotropic agent for use in the present disclosure is selected from the group of particulate thixotropic agents.

In an advantageous aspect of the present disclosure, the thixotropic agent for use herein is selected from the group of inorganic thixotropic agents, in particular silicon-based thixotropic agents and aluminum-based thixotropic agents.

In a more advantageous aspect, the thixotropic agent for use herein is selected from the group consisting of silica-based and silicate-based thixotropic agents.

According to a particularly advantageous aspect the thixotropic agent for use herein may be selected from the group consisting of fumed silica particles, in particular hydrophilic fumed silica and hydrophobic fumed silica; silicates particles, in particular phyllosilicates, and any mixtures thereof.

In another advantageous aspect the thixotropic agent for use herein may be selected from the group of organic thixotropic agents, in particular polyamide waxes, hydrolysed castor waxes and urea derivatives-based thixotropic agents.

In a particularly advantageous aspect, the thixotropic agent for use herein may be selected from the group consisting of fumed silica particles, in particular hydrophobic fumed silica particles; silicate-based particles, in particular phyllosilicate particles; polyamide waxes, and any mixtures thereof.

According to an exemplary aspect, the curable precursor of the disclosure comprises no greater than 20 wt.%, no greater than 15 wt.%, no greater than 10 wt.%, no greater than 8 wt.%, or even no greater than 5 wt.%, of the thixotropic agent, based on the overall weight of curable precursor.

According to another exemplary aspect, the curable precursor comprises from 0.05 to 20 wt.%, from 0.1 to 15 wt.%, from 0.5 to 10 wt.%, from 0.5 to 8 wt.%, from 1 to 6 wt.%, or even from 1 to 5 wt.%, of the thixotropic agent, based on the overall weight of curable precursor.

According to a typical aspect the curable precursor further may comprise a second curable monomer which is also different from the cationically self-polymerizable monomer.

In an advantageous aspect, the second curable monomer may comprise at least one functional group selected from the group consisting of epoxy groups, in particular glycidyl groups. Advantageously still, the second curable monomer may be an epoxy resin, in particular selected from the group consisting of phenolic epoxy resins, bisphenol epoxy resins, hydrogenated epoxy resins, aliphatic epoxy resins, halogenated bisphenol epoxy resins, novolac epoxy resins, and any mixtures thereof.

The second curable monomer for use herein may be an epoxy resin selected from the group consisting of hydrogenated bisphenol epoxy resins, in particular those derived from the reaction of hydrogenated bisphenol-A with epichlorhydrin (hydrogenated DGEBA resins), and any mixtures thereof. In the context it has been indeed surprisingly discovered that the use of a second curable monomer selected in particular from the group of hydrogenated bisphenol epoxy resins, substantially maintains or even improve the adhesion properties, in particular the peel adhesion properties of the resulting structural adhesive composition towards oily contaminated substrates. These specific curable precursors are particularly suitable to result into structural adhesive compositions having outstanding excellent oil-contamination tolerance towards, in particular oily contaminated metal substrates.

Exemplary oily contamination is for example mineral oils, and synthetic oils. Typical mineral oils include paraffinic mineral oils, intermediate mineral oils and naphthenic mineral oils.

In an advantageous aspect, the adhering step(s) of the surfaces to be bonded may be performed without using a pre-cleaning step of the substrates, parts and, and/or without using an adhesion promoter, in particular a priming composition or a tie layer.

According to another advantageous aspect, the curable precursor may comprise a thermoplastic resin. Thermoplastic resins for use herein are not particularly limited. Any thermoplastic resins commonly known in the art of structural adhesives may be used in the context of the present disclosure. Suitable thermoplastic resins for use herein may be easily identified by those skilled in the art in the light of the present disclosure.

Thermoplastic resins are known to those skilled in the art of structural adhesive compositions. Suitable exemplary thermoplastic resins for use herein are described e.g. in EP-A1-2 700 683 (Elgimiabi et al.).

The the thermoplastic resins for use herein may have a glass transition temperature (Tg) in a range from 60°C and 140°C, when measured by Differential Scanning Calorimetry (DSC).

In a more advantageous aspect, the thermoplastic resins for use herein may have a softening point comprised between 70°C and 120°C, preferably between 80°C and 100°C, more preferably between 85°C and 95°C.

The thermoplastic resin for use herein may be selected from the group consisting of polyether thermoplastic resins, polypropylene thermoplastic resins, polyvinyl chloride thermoplastic resins, polyester thermoplastic resins, polycaprolactone thermoplastic resins, polystyrene thermoplastic resins, polycarbonate thermoplastic resins, polyamide thermoplastic resins, polyurethane thermoplastic resins, and any combinations of mixtures thereof.

The thermoplastic resin for use herein may be selected from the group of polyether thermoplastic resins, and in particular polyhydroxyether thermoplastic resins.

In a more advantageous aspect, the polyhydroxyether thermoplastic resins for use herein may be selected from the group consisting of phenoxy resins, polyether diamine resins, polyvinylacetal resins, in particular polyvinyl butyral resins, and any combinations or mixtures thereof.

The thermoplastic resin for use herein may be selected from the group of phenoxy resins.

It has been indeed surprisingly discovered that the use of a thermoplastic resin, in particular a thermoplastic resin selected from the group of phenoxy resins, substantially improve the adhesion properties, in particular the peel adhesion properties, as well as the toughening characteristics of the resulting structural adhesive composition. This is particularly surprising and counterintuitive as thermoplastic resins are generally recognized and used as film-forming additives.

The curable precursor may be substantially free of acrylic-based monomers or acrylic resins. By "substantially free of acrylic-based monomers or acrylic resins", it is herewith meant to express that the curable precursor comprises less than 10wt.%, less than 5wt.%, less than 2wt.%, less than 1 wt. %, or even less than 0.5wt.% of acrylic-based monomers or acrylic resins.

The curable precursor of the disclosure may be substantially free of free radical-polymerizable monomers or compounds, in particular irradiation-initiated free radical initiators. By "substantially free of free radical-polymerizable monomers or compounds", it is herewith meant to express that the curable precursor comprises less than 10wt.%, less than 5wt.%, less than 2wt.%, less than 1 wt. %, or even less than 0.5wt.% of free radical-polymerizable monomers or compounds.

The curable precursor may comprise

a) from 0.1 to 20 wt.%, from 0.5 to 15 wt.%, from 0.5 to 10 wt.%, or even from 1 to 5 wt.% of a cationically self-polymerizable monomer;
b) from 10 to 80 wt.%, from 20 to 70 wt.%, or even from 20 to 60 wt.%, of a curable monomer;
c) from 0.01 to 10 wt.%, from 0.02 to 8 wt.%, from 0.05 to 5 wt.%, from 0.1 to 3 wt.%, or even from 0.2 to 2 wt.%, of a polymerization initiator of the cationically self-polymerizable monomer;
d) from 0.1 to 20 wt.%, from 0.2 to 15 wt.%, from 0.2 to 10 wt.%, from 0.5 to 8 wt.%, or even from 1 to 6 wt.%, of a curing initiator of the curable monomer;
e) from 0.05 to 20 wt.%, from 0.1 to 15 wt.%, from 0.5 to 10 wt.%, from 0.5 to 8 wt.%, from 1 to 6 wt.%, or even from 1 to 5 wt.%, of the thixotropic agent;
f) from 0 to 60 wt.%, from 1 to 50 wt.%, from 1 to 40 wt.%, from 2 to 30 wt.%, from 5 to 30 wt.%, from 5 to 20 wt.%, or even from 8 to 15 wt.%, of a second curable monomer;
g) from 0 to 20 wt.%, from 0.2 to 15 wt.%, from 0.2 to 10 wt.%, from 0.5 to 8 wt.%, or even from 1 to 5 wt.%, of a thermoplastic resin; and
h) from 0 to 20 wt.%, from 0.05 to 15 wt.%, from 0.1 to 10 wt.%, from 0.5 to 8 wt.%, or even from 0.5 to 5 wt.%, of a curing accelerator of the curable monomer; and
i) optionally, a toughening agent.

The curable precursor may comprise a cationically self-polymerizable monomer and a curable monomer in a weight ratio ranging from 0.5:99.5 to 50:50, from 1:99 to 40:60, from 1:99 to 30:70, from 2:98 to 30:70, from 2:98 to 20:80, from 2:98 to 15:85, from 2:98 to 10:90, from 3:97 to 8:92, or even from 3:97 to 6:94.

The curable precursor may be in the form of a one-part structural adhesive composition.

The curable precursor may be in the form of a two-part structural adhesive composition having a first part and a second part, wherein:

a) the first part comprises:

i. the cationically self-polymerizable monomer; and
ii. the curing initiator of the curable monomer;

b) the second part comprises:

i. the curable monomer; and
ii. the polymerization initiator of the cationically self-polymerizable monomer;

wherein the two-part (hybrid) structural adhesive composition further comprises the thixotropic in either the first part, the second part or in both parts; wherein the first part and the second part are kept separated prior to combining the two

parts and forming the structural adhesive composition.

According the appended claims, the present disclosure is directed to a partially cured precursor of a structural adhesive composition, comprising:

a) a polymeric material comprising the self-polymerization reaction product of a polymerizable material comprising a cationically self-polymerizable monomer, wherein the cationically self-polymerizable monomer is an aziridino-functional polyether oligomer;
b) optionally, some residual polymerization initiator of the cationically self-polymerizable monomer which is initiated at a temperature T1;
c) a curable monomer which is different from the cationically self-polymerizable monomer, wherein the curable monomer which is different from the cationically self-polymerizable monomer comprises at least one functional group selected from the group consisting of epoxy groups;
d) a curing initiator of the curable monomer which is initiated at a temperature T2 and which is different from the polymerization initiator of the cationically self-polymerizable monomer; and
e) a thixotropic agent: and wherein the curable monomers are substantially uncured and are in particular embedded into the polymeric material comprising the self-polymerization reaction product of a polymerizable material comprising a cationically self-polymerizable monomer; wherein the partially cured precursor of a structural adhesive composition is shaped in the form of a three-dimensional object;

and wherein the shape is selected from the group consisting of circular, semi-circular, ellipsoidal, square, rectangular, triangular, trapezoidal, polygonal shape, or any combinations thereof.

In a typical aspect of the partially cured precursor of a structural adhesive, the curable monomers are substantially uncured and are, in particular, embedded into the polymeric material comprising the self-polymerization reaction product of a polymerizable material comprising a cationically self-polymerizable monomer. In a typical aspect, the curable monomers are still liquid monomers embedded into the polymeric material resulting from the self-polymerization of the cationically self-polymerizable monomers, wherein this polymeric material represents a fully-established three-dimensional network.

The partially cured precursor typically is a stable and self-supporting composition having a dimensional stability, which makes it possible for it to be pre-applied on a selected substrate, in particular a liner, until further processing. In particular, the pre-applied substrate may be suitably transferred to other production sites until final full curing is performed. Advantageously still, the partially cured precursor may be appropriately shaped to fulfil the specific requirements of any selected applications. The partially cured precursor is typically provided with excellent characteristics and performance as to elasticity, tackiness, cold-flow and surface wetting.

According to a typical aspect of the partially cured precursor according to the disclosure, the polymeric material comprising the self-polymerization reaction product of the polymerizable material comprising the cationically self-polymerizable monomer is substantially fully polymerized and has in particular a degree of polymerization of more than 90%, more than 95%, more than 98%, or even more than 99%. As the polymeric material comprising the self-polymerization reaction product of the cationically self-polymerizable monomer is substantially fully polymerized, this polymerization reaction has advantageously a fixed and irreversible end and will not trigger any shelf-life reducing reactions in the remaining of the curable precursor. This characteristic will beneficially impact the overall shelf-life of the curable precursor.

According to a particularly advantageous aspect of the partially cured precursor, the polymeric material comprises or consists of a polyetherimine, in particular a linear or branched polyethylenimine (PEI). The polyetherimine typically results from the self-polymerization of bis-aziridino compounds, in particular N-alkyl aziridino-functional polyether oligomers, acting as cationically self-polymerizable monomers.

In one typical aspect the partially cured precursor may have a shear storage modulus in a range from 1000 to 250.000 Pa, from 1000 to 200.000 Pa, from 2000 to 150.000 Pa, from 3000 to 150.000 Pa, from 3000 to 100.000 Pa, or even from 3000 to 80.000 Pa, when measured according to the test method described in the experimental section.

According to an exemplary aspect, the partially cured precursor may have a shear storage modulus deviation no greater than 30%, no greater than 25%, no greater than 20%, no greater than 15%, no greater than 10%, or even no greater than 5%, when compared to the shear storage modulus of the corresponding curable precursor prior to partial curing, when the shear storage modulus deviation is measured according to the test method described in the experimental section.

According to another exemplary aspect, the partially cured may have a shape retention factor greater than 70%, greater than 75%, greater than 80%, greater than 85%, greater than 90%, or even greater than 95%, when compared to the shape of the corresponding curable precursor prior to partial curing, when the shape retention factor is measured according to the test method described in the experimental section.

In one advantageous aspect, the partially cured may have a glass transition temperature (Tg) no greater than 0°C, no greater than -5°C, no greater than -10°C, no greater than -15°C, or even no greater than -20°C, when measured

by DSC.

In another advantageous aspect the partially cured precursor may have an elongation at break of at least 50%, at least 80%, at least 100%, at least 150%, or even at least 200%, when measured according to tensile test DIN EN ISO 527. This particular property makes the partially cured precursor and the resulting structural adhesive suitable for automated handling and application, in particular by high-speed robotic equipment. More particularly, the partially cured precursor and the resulting structural adhesive of the present disclosure enables efficient automation of the process of forming a metal or composite material joint between metal or composite material plates.

According to one advantageous aspect, the curable precursor or the partially or fully cured structural adhesive composition may be shaped in the form of an elongated film. The elongated film shape is one conventional and convenient shape for the structural adhesive to be pre-applied on a selected substrate, in particular a liner, until further processing. However, this specific shape is not always satisfactory for adhesively bond assemblies provided with complex three-dimensional configurations or topologies, in particular provided with challenging bonding areas.

Accordingly, the curable precursor or the partially or fully cured (hybrid) structural adhesive composition may - in another aspect - be shaped in the form of a three-dimensional object. Suitable three-dimensional object shapes for use herein will broadly vary depending on the targeted bonding application and the specific configuration of the assembly to bond, in particular the bonding area. Exemplary three-dimensional object shapes for use herein will be easily identified by those skilled in the art in the light of the present disclosure.

According to one exemplary aspect of the present disclosure, the three-dimensional object has a shape selected from the group consisting of circular, semi-circular, ellipsoidal, square, rectangular, triangular, trapezoidal, polygonal shape, or any combinations thereof.

In the context of the present disclosure, the shape of the three-dimensional object is herein meant to refer to the shape of the section of the three-dimensional object according to a direction substantially perpendicular to the greatest dimension of the three-dimensional obj ect.

In yet another aspect of the present disclosure, it is a provided a method of bonding two parts comprising the step of using a partially cured precursor as described above.

According to a particular aspect of the disclosure, the method of bonding two parts comprises the steps of:

a) applying a partially cured precursor as described above to a surface of at least one of the two parts;
b) joining the two parts so that the curable precursor or the partially cured precursor (hybrid) structural adhesive composition is positioned between the two parts; and
c) optionally, partially curing the curable precursor according of step a) by initiating the polymerization initiator of the cationically self-polymerizable monomer, thereby forming a partially cured precursor comprising a polymeric material resulting from the self-polymerization reaction product of the cationically self-polymerizable monomer; and/or
d) substantially fully curing the partially cured precursor of step a) or c) by initiating the curing initiator of the cationically curable monomer, thereby obtaining a substantially fully cured (hybrid) structural adhesive composition and bonding the two parts.

According to an advantageous aspect of the method of bonding two parts, the two parts are metal or composite material parts.

According to another advantageous aspect, the method of bonding two parts is for hem flange bonding of metal or composite material parts as in the appended claims.

Methods of bonding two parts, in particular for hem flange bonding of metal parts, are well known to those skilled in the art of structural adhesive compositions. Suitable methods of bonding two parts for use herein are amply described e.g. in EP-A1-2 700 683 (Elgimiabi et al.) and in WO 2017/197087 (Aizawa).

In a particular aspect the substrates, parts and surfaces for use in these methods may comprise a metal selected from the group consisting of aluminum, steel, iron, and any mixtures, combinations or alloys thereof. More advantageously, the substrates, parts and surfaces may comprise a metal selected from the group consisting of aluminum, steel, stainless steel and any mixtures, combinations or alloys thereof. The substrates, parts and surfaces may comprise aluminum.

The substrates, parts and surfaces for use in these methods may comprise a composite material.

Any composite material commonly known in the art may be used in the context of the present disclosure. Suitable composite material for use herein may be easily identified by those skilled in the art in the light of the present disclosure.

In one particular aspect, the composite material may be selected from the group consisting of epoxy-based materials, phenolic-based materials, polyamide-based materials, polyethylene-based materials, polypropylene-based materials, polybutylene terephthalate-based materials, and any combinations or mixtures thereof.

In another aspect, the composite material may comprise a resin matrix and reinforcing fibers. Exemplary resin matrices may comprise a base material advantageously selected from the group consisting epoxy-based materials, phenolic-based materials, polyamide-based materials, polyethylene-based materials, polypropylene-based materials,

polybutylene terephthalate-based materials, and any combinations or mixtures thereof. In another particular aspect, the reinforcing fibers are selected from the group consisting of carbon fibers, glass fibers, ceramic fibers, and any combinations or mixtures thereof.

According to still another aspect, the present disclosure relates to the use of a partially cured precursor as described above, for industrial applications, in particular for construction and automotive applications, in particular for body-in-white bonding applications for the automotive industry and for structural bonding operations for the aeronautic and aerospace industries.

According to yet another aspect, the present disclosure relates to the use of a partially cured precursor as described above, for bonding metal or composite material parts, in particular for hem flange bonding of metal or composite material parts in the automotive industry.

The present disclosure is further illustrated by the following examples. These examples are merely for illustrative purposes only and are not meant to be limiting on the scope of the appended claims.

**Test Methods:**

*Preparation of the formulations for testing:*

The curable precursor compositions are prepared from an extruded mixture of two components (Part B and Part A). The preparation of both, part A and B, is described hereinafter. Parts A and Part B are weighed into a beaker in the appropriate mixing ratio and mixed at 3500 rpm for 0.5 minutes until a homogeneous mixture is achieved. As soon as this step is completed the mixing initiates the first reaction step (stage-B reaction step) resulting in a partially cured precursor within a period ranging from 30 to 60 minutes. Within the open time, the obtained paste is applied to the surface of the test panel for further testing in the manner specified below.

*Preparation of the test samples for OLS and T-Peel Tests:*

The surface of OLS and T-peel samples (steel, grade DX54+ZMB-RL1615) are cleaned with n-heptane. The test samples are left at ambient room temperature (23°C +/- 2°C, 50% relative humidity +/-5%) for 24 hours prior to testing and the OLS and T-peel strengths are measured as described above.

**1) Overlap Shear Strength (OLS) according to DIN EN 1465.**

Overlap shear strength is determined according to DIN EN 1465 using a Zwick Z050 tensile tester (commercially available by Zwick GmbH & Co. KG, Ulm, Germany) operating at a cross head speed of 10 mm/min. For the preparation of an Overlap Shear Strength test assembly, the paste resulting from the mixing of Part A and Part B is spackled onto one surface of a test panel and removed with a squeegee to give a defined layer having a thickness of 300 μm. The sample is then stored at room temperature for 12 hours to ensure full transformation into a precured precursor. Afterwards, the sample is covered by a second steel strip forming an overlap joint of 13 mm. The overlap joints are then clamped together using two binder clips and the test assemblies are further stored at room temperature for 4 hours after bonding, and then placed into an air circulating oven for 30 minutes at 180 °C. The next day, the samples are either tested directly or undergo ageing and are tested thereafter. Five samples are measured for each of the examples and results averaged and reported in MPa.

**2) T-Peel strength according to DIN EN ISO 11339.**

T-Peel strength is determined according to DIN EN ISO 11339 using a Zwick Z050 tensile tester (commercially available by Zwick GmbH & Co. KG, Ulm, Germany) operating at a cross head speed of 100 mm/min. For the preparation of a T-Peel Strength test assembly, the paste resulting from the mixing of Part A and Part B is placed in a syringe without needle cap and directly applied to the first surface via extruding a bead onto the middle of the T-peel test panel. The second test panel surface is then immediately bonded to the first forming an overlap j oint of 100 mm, without waiting for the transformation into a precured precursor state. The inclusion of glass beads into the formulation ensures that the right thickness of the layer (0,3 mm) is reached by pressing the surfaces together. After removal of squeezed-out adhesive, the samples are fixed together with clamps and first stored at room temperature for 12 hours, and then placed into an air circulating oven for 30 minutes at 180 °C. The next day, the samples are either tested directly or undergo ageing and are tested thereafter. Three samples are measured for each of the examples and results averaged and reported in Newtons (N).

**3) Shear storage modulus (G').**

The shear storage modulus is determined on a plate-plate rheometer (ARES, Rheometric Scientific) at a constant temperature (35°C).

**4) Shape retention performance**

The shape retention is determined according to the following procedure.

The curable compositions are shaped side-by-side into three-dimensional longitudinal beads having an equilateral triangle shape on a stainless-steel plate, using a customized squeegee provided with a suitable geometrically shaped recess. The steel plate is then placed at a 90° angle for 2 hours at 23°C. Afterwards, the steel plate is placed horizontally. The movement of the three-dimensional longitudinal bead is visually observed from a top view, and the shape retention factor is measured according to the following procedure.

The width of the base of the longitudinal bead is measured from a top view, wherein the base of the longitudinal bead is meant to refer to that portion of the bead which is direct contact with the stainless-steel plate. The middle of this width value is calculated and reported as value (A). This value corresponds to the distance between the lower extremity of the base of the longitudinal bead and the tip of the equilateral triangle which is opposed to the base, and which would be theoretically obtained for a three-dimensional longitudinal bead which remains unchanged through time (shape retention factor of 100%). In order to calculate the actual shape retention factor of the three-dimensional longitudinal beads, the actual distance between the lower extremity of the base of the longitudinal bead and the tip of the equilateral triangle which is opposed to the base, is measured and reported as value (B). This value is then compared to the theoretical value (A) according to the following formula:

$$\text{Shape retention factor (\%)} = (B/[A/2]\text{-}100)$$

**Raw materials:**

In the examples, the following raw materials and commercial adhesive tapes used are used:

**Bisaziridino polyether** (BAPE) is a cationically self-polymerizable bisaziridino-functional oligomer having a number average molecular weight of about 6200 g/mol, which is obtained by copolymerization of ethylene oxide and tetrahydrofuran (in a ratio of about 1:4) as described in DE 1 544 837 (Schmitt et al.).
**Methyl-*p*-toluenesulfonate** (MPTS) is a polymerization initiator of the cationically self-polymerizable monomer, commercially available from Sigma-Aldrich.
**Tris(2-ethylhexyl) ammonium terafluoroborate** (ATFB) is a polymerization initiator of the cationically self-polymerizable monomer, obtained from 3M ESPE, Seefeld, Germany.
**Tris(2-ethylhexyl) ammonium tosylate** (TAT) is a polymerization initiator of the cationically self-polymerizable monomer, obtained from 3M ESPE, Seefeld, Germany.
**DEN 431** is an epoxy resin, commercially available from DOW Chemical Pacific, The Heeren, Singapore.
**Epikote 828** is an epoxy resin, commercially available from Hexion Specialty Chemicals GmbH, Iserlohn, Germany.
**Eponex 1510** is a hydrogenated bisphenol epoxy resin, commercially available from Hexion Specialty Chemicals GmbH, Iserlohn, Germany.
**Amicure CG1200** is a dicyandiamide-based latent curing initiator for epoxides, commercially from available from Evonik, Allentown, PA, USA.
**Dyhard UR500** is a curing accelerator for epoxides, commercially available from AlzChem Trostberg, Germany.
**PK-HA** is a phenoxy resin, commercially available from Gabriel Phenoxies Inc., Rock Hill, SC, USA.
**KaneAce MX 257** is a toughening agent, commercially available from Kaneka Belgium N.V., Westerlo, Belgium.
**KaneAce MX 153** is a toughening agent, commercially available from Kaneka Belgium N.V., Westerlo, Belgium.
**Aerosil R202** is a thixotropic agent, hydrophobic fumed silica particles, commercially available from Evonik, Essen, Germany.
**Garamite 1958** is a thixotropic agent, organically modified phyllosilicates, commercially available from BYK-Chemie, Wesel, Germany.
**Aerosil 200** is a thixotropic agent, hydrophilic fumed silica particles, commercially available from Evonik, Essen, Germany.
**Disparlon 6500** is a thixotropic agent, polyamide, commercially available from King Industries Inc., Norwalk CT, USA.
**Sil Cell 32** is an aluminum silicate filler, commercially available from Stauss Perlite GmbH, Austria.
**Shieldex AC-5** is a silica based anti-corrosive agent, commercially available from Grace GmbH, Germany.

**MinSil SF20** is a fused silica filler, obtained from the 3M Company, USA.
**Dynasylan GLYEO** is a silane-based adhesion promoter agent, commercially available from Evonik GmbH, Germany.
**Glass Beads Class IV,** obtained from the 3M Company, USA.

## Examples:

*Preparation of Examples 1 to 6 and comparative example Cl*

The exemplary 2-component (Part A and Part B) curable compositions according to the present disclosure are prepared by combining the ingredients from the list of materials of Table 1 in a high-speed mixer (DAC 150 FVZ Speedmixer, available from Hauschild Engineering, Germany) stirring at 3500 rpm for 0.5 minutes until a homogeneous mixture is achieved. In Table 1, all concentrations are given as wt.%. Comparative example C1 does not comprise any thixotropic agent.

Part B is prepared as follows:
KaneAce MX 257, KanAce MX 153, PK-HA, Eponex 1510, Epikote 828 and DEN 431 are placed in a small beaker and mixed together using a planetary high-speed mixer (DAC150 FVZ) at 3500 rpm for 1 minute. Then, the polymerization initiator of the cationically self-polymerizable monomer is added and mixed until a homogeneous mixture is obtained. Thereafter, the thixotropic agent, Sil Cell 32, Shieldex AC-5 and MinSil SF20 are subsequently added and blended into the mixture by mixing at 3500 rpm for 1 minute. Then, Dynasylan GLYEO is added, followed by Glass Beads, resulting into Part B of the 2-component curable compositions.

Part A is prepared as follows:
Amicure CG1200 and Dyhard UR500 are placed in a beaker. Subsequently, the bisaziridino polyether (BAPE) is added to the mixture which is then mixed using a planetary high-speed mixer (DAC150 FVZ) at 3500 rpm for 1 minute until a homogeneous mixture is achieved, resulting into Part A of 2-component curable compositions.

Part A and Part B are weighed into a beaker in the correct mixing ratio and mixed at 3500 rpm for 0.5 minutes until a homogeneous mixture is achieved.

Table 1:

| Raw material | Weight % | | | | | | |
|---|---|---|---|---|---|---|---|
| | Ex.1 | Ex.2 | Ex.3 | Ex.4 | Ex.5 | Ex.6 | Ex.C1 |
| BAPE | 4.7 | 4.7 | 4.7 | 4.7 | 4 | 4 | 4.7 |
| ATFB | 0.15 | 0.15 | 0.15 | 0.15 | - | - | 0.15 |
| MPTS | - | - | - | - | 0.7 | - | - |
| TAT | - | - | - | - | - | 0.2 | - |
| DEN 431 | 8.1 | 8.1 | 8.1 | 8.1 | 7.8 | 7.8 | 8.1 |
| Epikote 828 | 5 | 5 | 5 | 5 | 2.5 | 2.5 | 5 |
| Eponex 1510 | 12 | 12 | 12 | 12 | 10.5 | 10.5 | 12 |
| Amicure CG1200 | 3.3 | 3.3 | 3.3 | 3.3 | 3.6 | 3.6 | 3.3 |
| Dyhard UR500 | 1.7 | 1.7 | 1.7 | 1.7 | 1.8 | 1.8 | 1.7 |
| PK-HA | 5.1 | 5.1 | 5.1 | 5.1 | 2.5 | 2.5 | 5.1 |
| KaneAce MX 257 | 21 | 21 | 21 | 21 | 23.5 | 23.7 | 21 |
| KaneAce MX 153 | 21 | 21 | 21 | 21 | 23.5 | 23.7 | 21 |
| Aerosil R202 | - | 1.5 | - | - | 2.8 | 2.8 | - |
| Garamite 1958 | 1.5 | - | - | - | - | - | - |
| Aerosil 200 | - | - | 1.5 | - | - | - | - |
| Disparlon 6500 | - | - | - | 1.5 | - | - | - |
| Sil Cell 32 | 0.75 | 0.75 | 0.75 | 0.75 | 0.9 | 0.9 | 0.75 |
| Shieldex AC-5 | 1.7 | 1.7 | 1.7 | 1.7 | 1.7 | 1.7 | 1.7 |

(continued)

| Raw material | Weight % | | | | | | |
|---|---|---|---|---|---|---|---|
| | Ex.1 | Ex.2 | Ex.3 | Ex.4 | Ex.5 | Ex.6 | Ex.C1 |
| MinSil SF20 | 12 | 12 | 12 | 12 | 12.2 | 12.3 | 13.5 |
| Dynasylan GLYEO | 1 | 1 | 1 | 1 | 1 | 1 | 1 |
| Glass Beads Class IV | 1 | 1 | 1 | 1 | 1 | 1 | 1 |

*Shapeabilitv performance*

All the exemplary curable compositions (Ex.1 to Ex.6) are stably shaped into three-dimensional longitudinal beads having the following shapes: triangle, semi-circular, rectangle, square, trapeze. The compositions are shaped using a customized squeegee provided with a suitable geometrically shaped recess. Upon visual observation, it appeared that the shape of the exemplary curable compositions remained substantially unchanged upon partial curing (stage B reaction).

*Shape retention performance*

The shape retention performance of the curable compositions according to Ex. 1, Ex.2 and Ex.C1 are tested according to the test method described hereinbefore.

Table 2: Results of the shape retention tests.

| | Ex.1 | Ex.2 | Ex.C1 |
|---|---|---|---|
| Shape retention factor (%) | 92 | 86 | 71 |

As can be seen from the results shown in Table 2, the partially cured curable precursors according to the present disclosure (Ex.1 and Ex.2) are provided with excellent shape retention characteristics when compared to partially cured curable precursors not according to the disclosure (Ex. C 1).

*OLS and T-Peel performance*

Table 3: Results of the OLS and T-Peel tests.

| | Example 5 | Example 6 |
|---|---|---|
| OLS (MPa) | 11.8 | 10.6 |
| T-Peel (N) | 96.1 | 88.5 |

As can be seen from the results shown in Table 3, the structural adhesives according to the present disclosure provide excellent performance and characteristics as to overlap shear strength and T-Peel strength.

**Claims**

**1.** A partially cured precursor of a structural adhesive composition, comprising:

a) a polymeric material comprising the self-polymerization reaction product of a polymerizable material comprising a cationically self-polymerizable monomer, wherein the cationically self-polymerizable monomer is an aziridino-functional polyether oligomer;
b) optionally, some residual polymerization initiator of the cationically self-polymerizable monomer which is initiated at a temperature T1;
c) a curable monomer which is different from the cationically self-polymerizable monomer, wherein the curable

monomer which is different from the cationically self-polymerizable monomer comprises at least one functional group selected from the group consisting of epoxy groups;
d) a curing initiator of the curable monomer which is initiated at a temperature T2 and which is different from the polymerization initiator of the cationically self-polymerizable monomer; and
e) a thixotropic agent; and
wherein the curable monomers are substantially uncured and are in particular embedded into the polymeric material comprising the self-polymerization reaction product of a polymerizable material comprising a cationically self-polymerizable monomer;
wherein the partially cured precursor of a structural adhesive composition is shaped in the form of a three-dimensional object; and
wherein the shape is selected from the group consisting of circular, semi-circular, ellipsoidal, square, rectangular, triangular, trapezoidal, polygonal shape, or any combinations thereof.

**2.** The partially cured precursor of a structural adhesive composition according to claim 1,

wherein the cationically self-polymerizable monomer is an oligomer having, in particular a number average molecular weight (as determined by GPC) no greater than 20.000 g/mol, no greater than 15.000 g/mol, no greater than 12.000 g/mol, no greater than 10.000 g/mol, or even no greater than 8.000 g/mol.

**3.** The partially cured precursor of a structural adhesive composition according to any one of the preceding claims, wherein the polymerization initiator of the cationically self-polymerizable monomer is selected from the group consisting of protonating agents, alkylating agents, and any combinations or mixtures thereof.

**4.** The partially cured precursor of a structural adhesive composition according to any one of the preceding claims, wherein the curing initiator of the curable monomer is selected from the group consisting of primary amines, secondary amines, and any combinations or mixtures thereof.

**5.** The partially cured precursor of a structural adhesive composition according to any one of the preceding claims, wherein the thixotropic agent is selected from the group of inorganic and organic thixotropic agents.

**6.** The partially cured precursor of a structural adhesive composition according to claim 6, wherein the thixotropic agent is selected from the group of inorganic thixotropic agents, in particular silicon-based thixotropic agents and aluminum-based thixotropic agents.

**7.** A method of bonding two parts, which comprises the steps of:

a) applying a partially cured precursor according to any of the preceding claims to the surface of at least one of the two parts;
b) joining the two parts so that the curable precursor or the partially cured precursor structural adhesive composition is positioned between the two parts; and
c) optionally, partially curing the curable precursor according of step a) by initiating the polymerization initiator of the cationically self-polymerizable monomer, thereby forming a partially cured precursor comprising a polymeric material resulting from the self-polymerization reaction product of the cationically self-polymerizable monomer; and/or
d) substantially fully curing the partially cured precursor of step a) or c) by initiating the curing initiator of the cationically curable monomer, thereby obtaining a substantially fully cured structural adhesive composition and bonding the two parts.

**8.** A method of bonding two parts according to claim 7, wherein the two parts are metal or composite material parts, and wherein the method is for hem flange bonding of metal or composite material parts.

**9.** Use of a partially cured precursor according to any of claims 1 to 6, for industrial applications, in particular for construction and transportation applications, more in particular for body-in-white bonding applications for the automotive industry and for structural bonding operations for the aeronautic and aerospace industries.

## Patentansprüche

**1.** Ein teilweise gehärteter Vorläufer einer Strukturklebstoffzusammensetzung, umfassend:

a) ein Polymermaterial, umfassend das Selbstpolymerisationsreaktionsprodukt eines polymerisierbaren Materials, das ein kationisch selbstpolymerisierbares Monomer umfasst, wobei das kationisch selbstpolymerisierbare Monomer ein aziridinofunktionelles Polyetheroligomer ist;
b) wahlweise etwas verbleibenden Polymerisationsinitiator des kationisch selbstpolymerisierbaren Monomers, der bei einer Temperatur T1 initiiert wird;
c) ein härtbares Monomer, das sich von dem kationisch selbstpolymerisierbaren Monomer unterscheidet, wobei das härtbare Monomer, das sich von dem kationisch selbstpolymerisierbaren Monomer unterscheidet, mindestens eine funktionelle Gruppe umfasst, ausgewählt aus der Gruppe bestehend aus Epoxygruppen;
d) einen Härtungsinitiator des härtbaren Monomers, der bei einer Temperatur T2 initiiert wird und der sich von dem Polymerisationsinitiator des kationisch selbstpolymerisierbaren Monomers unterscheidet; und
e) ein thixotropes Mittel; und

wobei die härtbaren Monomere im Wesentlichen ungehärtet sind und insbesondere in das polymere Material eingebettet sind, das das Selbstpolymerisationsreaktionsprodukt eines polymerisierbaren Materials umfasst, das ein kationisch selbstpolymerisierbares Monomer umfasst;
wobei der teilweise gehärtete Vorläufer einer strukturellen Klebstoffzusammensetzung in Form eines dreidimensionalen Objekts geformt ist; und
wobei die Form aus der Gruppe ausgewählt ist bestehend aus kreisförmiger, halbkreisförmiger, ellipsoider, quadratischer, rechteckiger, dreieckiger, trapezförmiger, polygonaler Form oder beliebigen Kombinationen davon besteht.

**2.** Der teilweise gehärtete Vorläufer einer Strukturklebstoffzusammensetzung nach Anspruch 1, wobei das kationisch selbstpolymerisierbare Monomer ein Oligomer ist, das insbesondere ein zahlenmittleres Molekulargewicht (wie durch GPC bestimmt) von nicht höher als 20,000 g/mol, nicht höher als 15,000 g/mol, nicht höher als 12,000 g/mol, nicht höher als 10,000 g/mol oder sogar nicht höher als 8,000 g/mol, aufweist.

**3.** Der teilweise gehärtete Vorläufer einer Strukturklebstoffzusammensetzung nach einem der vorstehenden Ansprüche, wobei der Polymerisationsinitiator des kationisch selbstpolymerisierbaren Monomers ausgewählt ist aus der Gruppe bestehend aus Protonierungsmitteln, Alkylierungsmitteln und beliebigen Kombinationen oder Mischungen davon.

**4.** Der teilweise gehärtete Vorläufer einer Strukturklebstoffzusammensetzung nach einem der vorstehenden Ansprüche, wobei der Härtungsinitiator des härtbaren Monomers ausgewählt ist aus der Gruppe bestehend aus primären Aminen, sekundären Aminen und beliebigen Kombinationen oder Mischungen davon.

**5.** Der teilweise gehärtete Vorläufer einer Strukturklebstoffzusammensetzung nach einem der vorstehenden Ansprüche, wobei das Thixotropiermittel ausgewählt ist aus der Gruppe von anorganischen und organischen Thixotropiermitteln.

**6.** Der teilweise gehärteter Vorläufer einer strukturellen Klebstoffzusammensetzung nach Anspruch 6, wobei das Thixotropiermittel ausgewählt ist aus der Gruppe von anorganischen Thixotropiermitteln, insbesondere Thixotropiermitteln auf Siliziumbasis und Thixotropiermitteln auf Aluminiumbasis.

**7.** Ein Verfahren zum Verbinden zweier Teile, das die folgenden Schritte umfasst:

a) Aufbringen eines teilweise gehärteten Vorläufers nach einem der vorstehenden Ansprüche auf die Oberfläche mindestens eines der beiden Teile;
b) Zusammenfügen der zwei Teile, sodass der härtbare Vorläufer oder die teilweise gehärtete Vorläuferstrukturklebstoffzusammensetzung zwischen den zwei Teilen positioniert ist; und
c) wahlweise teilweises Härten des härtbaren Vorläufers gemäß Schritt a) durch Initiieren des Polymerisationsinitiators des kationisch selbstpolymerisierbaren Monomers, wodurch ein teilweise gehärteter Vorläufer gebildet wird, der ein polymeres Material umfasst, das aus dem Selbstpolymerisationsreaktionsprodukt des kationisch selbstpolymerisierbaren Monomers resultiert; und/oder
d) im Wesentlichen vollständiges Härten des teilweise gehärteten Vorläufers von Schritt a) oder c) durch Initiieren

des Härtungsinitiators des kationisch härtbaren Monomers, wodurch eine im Wesentlichen vollständig gehärtete Strukturklebstoffzusammensetzung erhalten wird, und Verbinden der zwei Teile.

**8.** Ein Verfahren zum Verbinden zweier Teilen nach Anspruch 7, wobei die zwei Teile Metall- oder Verbundwerkstoffteile sind und wobei das Verfahren für Saumflanschverbinden von Metall- oder Verbundwerkstoffteilen bestimmt ist.

**9.** Verwendung eines teilweise gehärteten Vorläufers nach einem der Ansprüche 1 bis 6 für industrielle Anwendungen, insbesondere für Anwendungen im Bau- und Transportwesen, mehr insbesondere für Karosserieverklebungsanwendungen in der Automobilindustrie und für strukturelle Verklebungsvorgänge in der Luft- und Raumfahrtindustrie.

## Revendications

**1.** Précurseur partiellement durci d'une composition d'adhésif structurel, comprenant :

a) un matériau polymère comprenant le produit de réaction d'autopolymérisation d'un matériau polymérisable comprenant un monomère autopolymérisable par voie cationique, dans lequel le monomère autopolymérisable par voie cationique est un oligomère de polyéther à fonctionnalité aziridino ;
b) facultativement, une partie de l'initiateur de polymérisation résiduel du monomère autopolymérisable par voie cationique qui est initié à une température T1 ;
c) un monomère durcissable qui est différent du monomère autopolymérisable par voie cationique, dans lequel le monomère durcissable qui est différent du monomère autopolymérisable par voie cationique comprend au moins un groupe fonctionnel choisi dans le groupe constitué de groupes époxy ;
d) un initiateur de durcissement du monomère durcissable qui est initié à une température T2 et qui est différent de l'initiateur de polymérisation du monomère autopolymérisable par voie cationique ; et
e) un agent thixotrope ; et

dans lequel les monomères durcissables sont sensiblement non durcis et sont en particulier noyés dans le matériau polymère comprenant le produit de réaction d'autopolymérisation d'un matériau polymérisable comprenant un monomère autopolymérisable par voie cationique ;
dans lequel le précurseur partiellement durci d'une composition d'adhésif structurel est façonné sous la forme d'un objet tridimensionnel ; et
dans lequel la forme est choisie dans le groupe constitué de forme circulaire, semi-circulaire, ellipsoïdale, carrée, rectangulaire, triangulaire, trapézoïdale, polygonale, ou toute combinaison de celles-ci.

**2.** Précurseur partiellement durci d'une composition d'adhésif structurel selon la revendication 1, dans lequel le monomère autopolymérisable par voie cationique est un oligomère ayant, en particulier, une masse moléculaire moyenne en nombre (telle que déterminée par CPG) non supérieure à 20 000 g/mol, non supérieure à 15 000 g/mol, non supérieure à 12 000 g/mol, non supérieure à 10 000 g/mol, ou encore non supérieure à 8 000 g/mol.

**3.** Précurseur partiellement durci d'une composition d'adhésif structurel selon l'une quelconque des revendications précédentes, dans lequel l'initiateur de polymérisation du monomère autopolymérisable par voie cationique est choisi dans le groupe constitué d'agents de protonation, agents d'alkylation, et toutes combinaisons ou tous mélanges de ceux-ci.

**4.** Précurseur partiellement durci d'une composition d'adhésif structurel selon l'une quelconque des revendications précédentes, dans lequel l'initiateur de durcissement du monomère durcissable est choisi dans le groupe constitué d'amines primaires, amines secondaires, et toutes combinaisons ou tous mélanges de celles-ci.

**5.** Précurseur partiellement durci d'une composition d'adhésif structurel selon l'une quelconque des revendications précédentes, dans lequel l'agent thixotrope est choisi dans le groupe d'agents thixotropes inorganiques et organiques.

**6.** Précurseur partiellement durci d'une composition d'adhésif structurel selon la revendication 6, dans lequel l'agent thixotrope est choisi dans le groupe d'agents thixotropes inorganiques, en particulier d'agents thixotropes à base de silicium et d'agents thixotropes à base d'aluminium.

**7.** Procédé de liaison de deux parties, qui comprend les étapes consistant à :

a) appliquer un précurseur partiellement durci selon l'une quelconque des revendications précédentes sur la surface d'au moins une des deux parties ;
b) joindre les deux parties de sorte que le précurseur durcissable ou la composition d'adhésif structurel de précurseur partiellement durci est positionné entre les deux parties ; et
c) facultativement, faire durcir partiellement le précurseur durcissable selon l'étape a) en initiant l'initiateur de polymérisation du monomère autopolymérisable par voie cationique, permettant ainsi de former un précurseur partiellement durci comprenant un matériau polymère résultant du produit de réaction d'autopolymérisation du monomère autopolymérisable par voie cationique ; et/ou
d) faire durcir de manière sensiblement complète le précurseur partiellement durci de l'étape a) ou c) en initiant l'initiateur de durcissement du monomère durcissable par voie cationique, permettant ainsi d'obtenir une composition d'adhésif structurel durcie de façon sensiblement complète et de lier les deux parties.

**8.** Procédé de collage de deux parties selon la revendication 7, dans lequel les deux parties sont des parties en métal ou en matériau composite, et dans lequel le procédé est destiné au collage de bords rabattus de parties en métal ou en matériau composite.

**9.** Utilisation d'un précurseur partiellement durci selon l'une quelconque des revendications 1 à 6, pour des applications industrielles, en particulier pour des applications de construction et de transport, plus particulièrement pour des applications de collage de carrosseries en blanc pour l'industrie automobile et pour des opérations de collage structurel pour les industries aéronautique et aérospatiale.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6000118 A, Biernat
- US 6368008 B, Biernat
- WO 2009071269 A, Morral
- US 6528176 B, Asai
- WO 2007014039 A, Lamon
- EP 2700683 A1, Elgimiabi
- WO 2017197087 A, Aizawa
- US 20020182955 A1, Weglewski
- EP 3243885 A1, Koch
- WO 03052016 A2
- US 2005101684 A1
- EP 3275913 A1
- EP 3632964 A1
- WO 2018057335 A
- US 3453242 A, Schmitt
- US 20030153726 A1, Eckhardt
- DE 1544837, Schmitt


### Non-patent literature cited in the description


- **O.C. DERMER ; G. E. HAM.** Ethylenimine and other Aziridines. Academic Press, 1969